# EUROPEAN PATENT APPLICATION

(11) **EP 2 186 679 A1**
(43) Date of publication of application: **19.05.2010**
(21) Application number: 09013955.1
(22) Date of filing: 06.11.2009
(51) Int. Cl.: B60Q 1/072, B60Q 1/14

(54) **Vehicle lighting fixture**

(30) Priority: 18.11.2008 JP 2008294396
(71) Applicant: Stanley Electric Co., Ltd., Meguro-ku Tokyo 153-8636 (JP)
(72) Inventor: Seki, Kunihiko, Tokyo 153-8636 (JP); Matsumoto, Ryoichi, Tokyo 153-8636 (JP); Tanaka, Hidemi, Tokyo 153-8636 (JP); Saitou, Taku, Tokyo 153-8636 (JP); Hasegawa, Seiji, Tokyo 153-8636 (JP); Yasuma, Mitsuru, Tokyo 153-8636 (JP); Nagasawa, Satoshi, Tokyo 153-8636 (JP)
(74) Representative: Wagner, Karl H.

(57) **Abstract**

The present invention provides a vehicle lighting fixture (10) which can produce a desired low beam pattern when a vehicle travels a region where vehicular lanes are arranged on an opposite side of a road. A vehicle lighting fixture (10) includes a first optical system (20) which forms a high beam pattern, and a second optical system (40) which forms a low beam pattern. The second optical system (40) includes an optical unit (42) which forms a cut-off line of the low beam pattern, and optical units (44, 46, 48) which form a horizontal pattern of the low beam pattern. The optical unit (42) is connected to a dimming control unit (72). The optical unit (42) can be controlled by the dimming control unit (72) so that a desired tourist solution light distribution is formed when a vehicle travels a region where vehicular lanes are arranged on an opposite side of a road.

## Description

### BACKGROUND OF THE INVENTION

### Field of the Invention

The present invention relates to a vehicle lighting fixture, and more particularly, to a vehicle lighting fixture which forms a low beam pattern.

### Description of the Related Art

In recent years, people can freely travel by vehicle between regions where vehicular lanes are arranged according to different rules, such as traveling between the United Kingdom and continental Europe across the Strait of Dover. Regarding a light distribution pattern of a headlight, however, vehicles are designed for left-hand traffic in the United Kingdom, and for right-hand traffic in continental Europe.

Therefore, when a vehicle with the light distribution pattern designed for left-hand traffic travels continental Europe, or when a vehicle with the light distribution pattern designed for right-hand traffic travels the United Kingdom, the light distribution pattern of the headlight is opposite to a desired one in the destination country.

Generally, in order to avoid glare to oncoming vehicles, a low-beam light distribution pattern on a side of the oncoming traffic lane (the right-hand lane in the case of left-hand traffic, and the left-hand lane in the case of right-hand traffic) is set not to emit light beams above a horizontal line. Also, in order to improve visibility on the road-shoulder side (the left-hand lane in the case of left-hand traffic, and the right-hand lane in the case of right-hand traffic), a low-beam light distribution pattern on the road-shoulder side forms a so-called cut-off line so as to emit light beams above the horizontal line as well.

Thus, when a vehicle travels regions where vehicular lanes are arranged according to different rules, there occurs a problem that a low-beam light distribution of the vehicle may dazzle a driver of oncoming vehicle. In a case where a headlamp is designed to satisfy the requirements regarding traffic on only one side of the road, it is required by the regulations to take appropriate measures so as not to annoy users in a country where vehicular lanes are arranged according to a rule different from that in a country for which the headlamp is designed. That is, a so-called tourist solution light distribution different from a regular light distribution pattern is required to travel a region where vehicular lanes are arranged in an opposite way.

In order to solve the problem, Japanese Patent Application Laid-Open No. 07-296604 discloses that a light distribution switching lens capable of changing an angle of a low beam is attached to a lamp lens with a sufficient distance therebetween.

Also, Japanese Patent Application Laid-Open No. 2006-73224 discloses a projection type headlamp for vehicle including a light distribution switching mechanism capable of switching between light distributions having different cut line heights and shapes by vertically sliding two light-blocking shades parallel to each other.

### SUMMARY OF THE INVENTION

However, in Japanese Patent Application Laid-Open No. 07-296604, the angle is changed only by attaching the light distribution switching lens to the lamp lens. Thus, a desired low-beam light distribution pattern required in the tourist solution cannot be sufficiently obtained depending on the attachment position.

Also, since it is necessary to provide the mechanism capable of vertically sliding the two light-blocking shades parallel to each other inside a vehicle lighting fixture in Japanese Patent Application Laid-Open No. 2006-73224, the mechanism of the vehicle lighting fixture is complicated.

The present invention has been made in view of such circumstances, and it is an object of the present invention to provide a vehicle lighting fixture which can easily and accurately produce a light distribution pattern that does not dazzle the drivers of oncoming vehicles when a vehicle travels a region where vehicular lanes are arranged in an opposite way.

In order to achieve the above object, a vehicle lighting fixture according to an aspect of the present invention includes: an optical system which has a plurality of optical units and forms a low beam pattern, some of the plurality of optical units forming a horizontal pattern of the low beam pattern, and the other of the plurality of optical units forming a cut-off line of the low beam pattern; and an adjusting mechanism which can selectively change an illumination pattern of the optical unit which forms the cut-off line.

In the vehicular lighting fixture according to the aspect, the optical units which form the low beam pattern include: at least one optical unit which forms the horizontal pattern; and at least one optical unit which forms the cut-off line, separately. The vehicular lighting fixture further includes the adjusting mechanism which can selectively change the illumination pattern of the at least one optical unit which forms the cut-off line. Accordingly, when a vehicle travels a region where vehicular lanes are arranged on the opposite side of road, low beam patterns according to the respective regulations for left-hand traffic and right-hand traffic can be accurately obtained without changing the horizontal pattern.

In the vehicle lighting fixture according to the above aspect of the present invention, the other of the plurality of optical units forming the cut-off line is arranged on an innermost side among the plurality of optical units.

In a case where a vehicle has a shape in which a vehicle front end portion is curved as viewed from above, that is, the front end is rounded, which has recently become popular, a headlight also needs to be rounded to fit the shape. In this case, since the other of the plurality of optical units forming the cut-off line is arranged on the innermost side, it is possible to prevent the other of the plurality of optical units forming the cut-off line from being blocked by an adjacent optical unit.

The "inner side" means the "a center side of a front face of a vehicle" in a normal state where the vehicle lighting fixture is mounted on the vehicle.

In the vehicle lighting fixture according to the above aspect of the present invention, the adjusting mechanism is preferably a control mechanism which can control a light intensity of the other of the plurality of optical units forming the cut-off line.

By controlling the light intensity of the other of the plurality of optical units, a desired low beam pattern can be easily obtained. "Controlling the light intensity" includes both the cases of turning OFF the optical unit and dimming a light emitted from the optical unit.

In the vehicle lighting fixture according to the above aspect of the present invention, the adjusting mechanism is preferably an aiming mechanism which can adjust an optical axis of the other of the plurality of optical units forming the cut-off line in a vertical direction.

By directing the optical axis of the other of the plurality of optical units forming the cut-off line downward from a regular cut-off line, a desired low beam pattern can be easily obtained.

According to the aspects of the present invention, the low beam pattern according to respective regulations for left-hand traffic and right-hand traffic can be obtained even when a vehicle travels a region where vehicular lanes are arranged on a side of road which is an opposite side in a region for which a headlamp of the vehicle is designed.

### BRIEF DESCRIPTION OF THE DRAWINGS

Figs. 1A and 1B are a front view and a horizontal sectional view of a vehicle lighting fixture according to an embodiment of the present invention;
Figs. 2A and 2B are views for explaining light distribution patterns of a vehicle to which the vehicle lighting fixture according to the embodiment is applied; and
Fig. 3 is a vertical sectional view of a vehicle lighting fixture according to another embodiment of the present invention.

### DETAILED DESCRIPTION OF THE PREFERRED EMBODIMENTS

In the following, preferred embodiments of the present invention will be described with reference to the accompanying drawings. Although the present invention will be described based on the following preferred embodiments, the present invention may be changed in various ways without departing from the scope of the invention, and another embodiment different from the present embodiments may be also employed. Therefore, any change within the scope of the invention is included in the scope of claims.

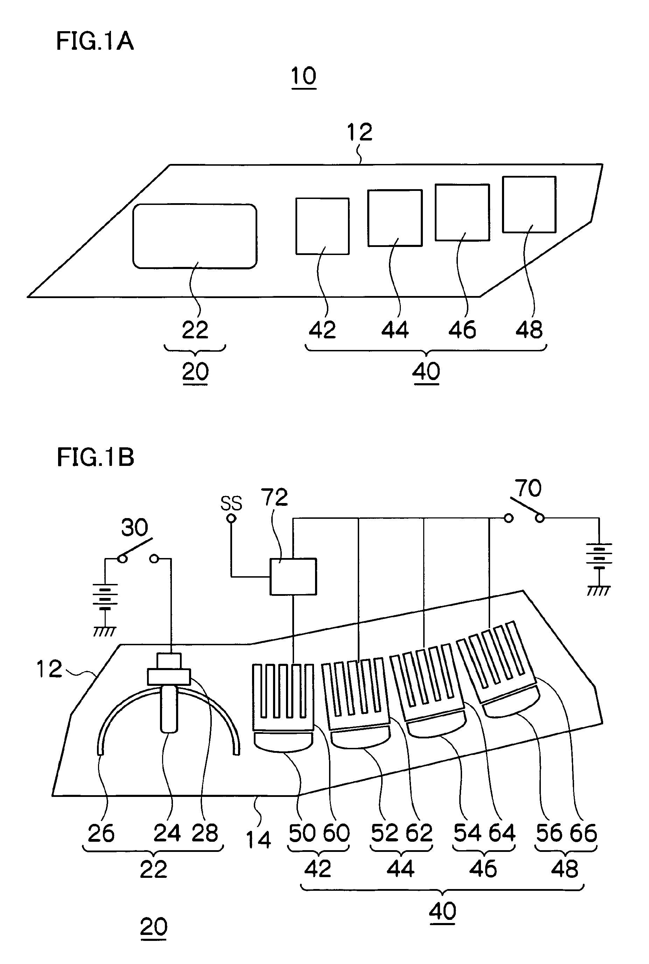

Figs. 1A and 1B are a front view and a horizontal sectional view of a vehicle lighting fixture to which an embodiment of the present invention is applied. A vehicle lighting fixture 10 includes: a first optical system 20 which forms a high beam pattern; a second optical system 40 which forms a low beam pattern; a housing 12 which holds the first optical system 20 and the second optical system 40; and a front surface lens 14 which is provided in the opening portion of the housing 12.

The first optical system 20 includes at least one optical unit 22. The optical unit 22 includes a light source 24, a reflector 26 which is arranged to surround the light source 24 and reflects a light beam from the light source 24, and a socket 28 which fixes the light source 24. The reflector 26 is basically formed as a concave curved surface such as a paraboloid of revolution. The reflector 26 is made of a resin material, for example. An aluminum-deposited film or the like is formed on the surface of the reflector 26, and the surface is mirror-finished.

The light source 24 can be any type of light source which can be used for the headlight of a vehicle. The light source 24 includes a bulb, HID (High Intensity Discharge) lamp and LED (Light Emitting Diode) lamp. Further, the bulb includes an incandescent bulb, a halogen bulb, and a discharge lamp like a metal halide lamp. The socket 28 fixedly holds the light source 24 to feed power thereto. The light source 24 is electrically connected to the power-supply unit of a vehicle via the socket 28. A switch 30 is turned ON or OFF by a driver, thereby turning ON or OFF the optical unit 22.

The second optical system 40 includes four optical units 42, 44, 46, and 48 in the present embodiment. The optical units 42, 44, 46, and 48 respectively include optical lens units 50, 52, 54, and 56 each having a light source (not shown), and heat sinks 60, 62, 64, and 66.

The optical units 42, 44, 46, and 48 are respectively electrically connected to the power-supply unit of the vehicle. A switch 70 is turned ON or OFF by a driver, thereby turning ON or OFF the optical units 42, 44, 46, and 48. When all the optical units 42, 44, 46, and 48 are turned ON, the second optical system forms the low beam pattern according to the regulations of a region where the vehicle is sold. The optical unit 42 arranged on the innermost side (nearest to a center of a front face of the vehicle) among the plurality of optical units mainly forms a cut-off line of the low beam pattern. Meanwhile, the other optical units 44, 46 and 48 form a horizontal pattern of the low beam pattern.

Since the optical unit which forms the cut-off line is arranged on the innermost side, so that the optical unit which forms the cut-off line can be prevented from being blocked by the adjacent optical unit even when the vehicular lighting fixture 10 is applied to a vehicle having a shape in which its front end is rounded.

The number, arrangement and the like of the optical units which form the low beam pattern are not limited to those in the present embodiment, and may be appropriately changed. However, it is important that the optical unit which forms the cut-off line is separately provided from the optical units which form the horizontal pattern. Accordingly, the cut-off line can be adjusted without changing the horizontal pattern.

The optical unit 42 which forms the cut-off line is electrically connected to a dimming control unit 72. A switching signal (SS) from a driver is input to the dimming control unit 72. The dimming control unit 72 controls to perform a dimming operation or stops the dimming operation of the optical unit 42 based on the switching signal (SS) from the driver. The dimming control unit 72 can perform the dimming operation of the optical unit 42 by adjusting the duty ratio of turning-ON and turning-OFF, for example. When the switching signal (SS) is input, the dimming control unit 72 is brought into an operating state. When the switch 70 is turned ON, the optical unit 42 is controlled by the dimming control unit 72. The optical unit 42 thereby emits a light beam that is dimmed at a preset rate (light reduce rate).

As a method for providing the switching signal (SS), a method of using a switching button provided on a dashboard, a method of performing switching by use of a specialized tool, or the like may be appropriately performed. Also, a switching device may be provided inside an engine compartment to avoid false operation by a driver.

In order to make the light beam from the optical unit 42 close to 0 as much as possible, the dimming control unit 72 may be replaced with a switch which operates according to an instruction from a driver as another embodiment. When the switch is turned ON or OFF, the optical unit 42 can be turned ON or OFF.

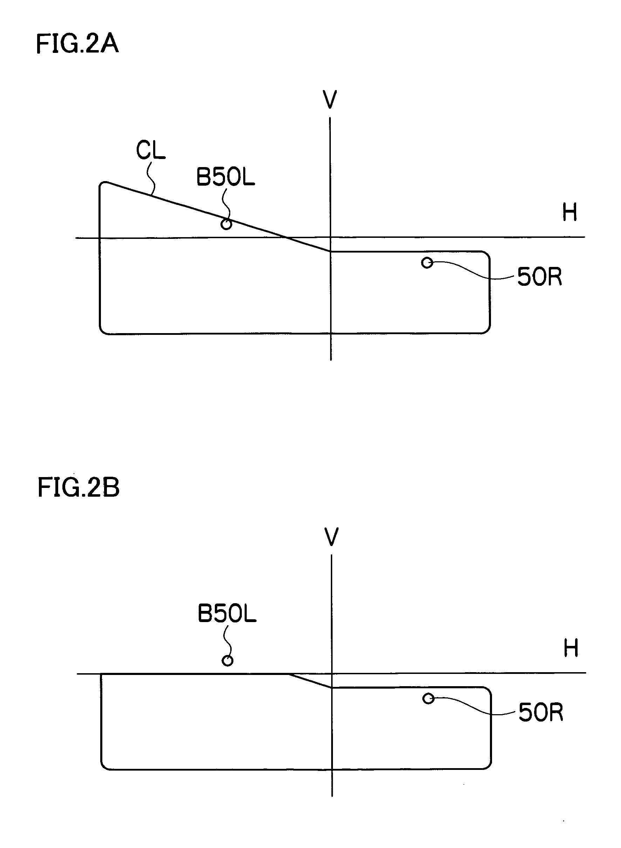

Next, the operation according to the embodiment of the present invention will be described based on the vehicle lighting fixture 10 in Figs. 1A and 1B with reference to light distribution patterns shown in Figs. 2A and 2B. The light distribution patterns shown in Figs. 2A and 2B show an example of a case in which the vehicle lighting fixture 10 is mounted on a vehicle for left-hand traffic. Fig. 2A shows a light distribution pattern (a regular light distribution) obtained by turning ON the optical units 42, 44, 46, and 48 for forming a low beam pattern of the vehicle lighting fixture 10 in a left-hand traffic region. In the regular light distribution, the low beam pattern includes a cut-off line (CL) that is inclined at 15° with respect to a horizontal line. Accordingly, in the vehicle for left-hand traffic, a driver of an oncoming vehicle can be prevented from being dazzled, and the forward visibility for a driver can be improved.

In the regular light distribution for left-hand traffic, a light intensity higher than 3 lx (lux) is required at a point 50R, and a light intensity higher than 1 lx is required at a point B50L. Since all the optical units 42, 44, 46, and 48 are turned ON in the vehicle lighting fixture 10 shown in Figs. 1A and 1B, the requirements of the regular light distribution can be satisfied.

Fig. 2B shows a light distribution pattern (a tourist solution light distribution) obtained by turning ON the optical units 42, 44, 46, and 48 for forming a low beam pattern of the vehicle lighting fixture 10 in a right-hand traffic region. In the present embodiment, the dimming control unit 72 is in an operating state, and the light intensity of the optical unit 42 is controlled by the dimming control unit 72. Accordingly, in the tourist solution light distribution, the light beam from the optical unit 42 is dimmed in a region above the horizontal line (H) so as not to dazzle a driver of an oncoming vehicle.

In the tourist solution light distribution for right-hand traffic, a light intensity higher than 3 lx is required at a point 50R, and a light intensity lower than 1 lx is required at a point B50L. Since the optical unit 42 is controlled by the dimming control unit 72 in the vehicle lighting fixture 10 in Figs. 1A and 1B, the requirement that the light intensity be lower than 1 lx at the point B50L can be satisfied. Meanwhile, since the optical units 44, 46 and 48 are not controlled, the light intensity higher than 3 lx can be achieved at the point 50R.

A switch may be also provided instead of the dimming control unit 72 shown in Figs. 1A and 1B. It will be easily understood that the requirement that the light intensity be lower than 1 lx at the point B50L is satisfied by turning OFF the optical unit 42 by the switch.

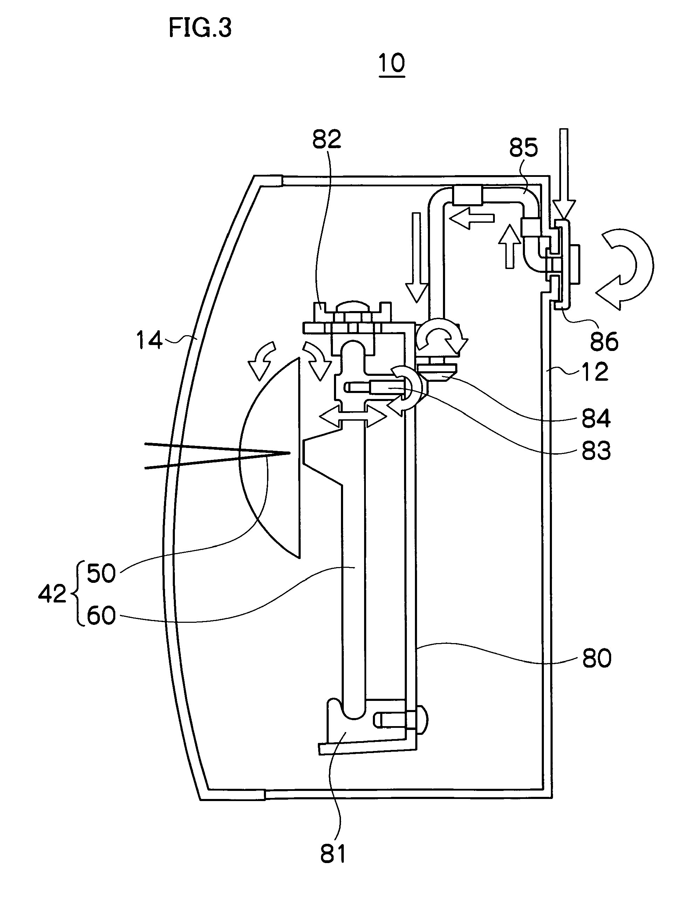

Next, the vehicle lighting fixture 10 according to the present invention where an aiming mechanism is applied to the optical unit which forms the cut-off line instead of the dimming control unit will be described with reference to Fig. 3.

Fig. 3 is a sectional view in a vertical direction of the optical unit 42. The optical unit 42 is arranged in a space formed by the housing 12 and the front surface lens 14. The optical unit 42 includes the optical lens unit 50 having the light source (not shown), and the heat sink 60 which fixes the optical lens unit 50. The heat sink 60 extends in the vertical direction, and its lower end is supported in a bearing 81 that is fixed to a frame 80. The lower end of the heat sink 60 thereby works as a base point (fulcrum point) of rotation. On the other hand, a fixing nut 82 is attached to the upper end of the heat sink 60. The fixing nut 82 and the upper end of the heat sink 60 are adapted to be movable backward and forward along the frame 80. Accordingly, the optical lens unit 50 can be inclined with the lower end as a fulcrum point to be brought close to the front surface lens 14.

The heat sink 60 is fixed to the frame 80 with an aiming bolt 83. By rotating the aiming bolt 83, the optical lens unit 50 can be fixed to a desired position. The distal end of the aiming bolt 83 is allowed to mechanically mesh with a bevel gear 84 that is fixed to the frame 80. One end of a flexible wire 85 is mechanically connected to the bevel gear 84. The other end of the flexible wire 85 is mechanically connected to an aiming gear 86 that is attached to the housing 12.

Next, the operation of the aiming mechanism will be described. When a driver 90 is rotated, the rotation of the aiming gear 86 is transmitted to the bevel gear 84 via the flexible wire 85. The rotation of the bevel gear 84 is transmitted to the aiming bolt 83, and rotational movement is converted to linear (backward and forward) movement. The aiming bolt 83 is rotated to move backward and forward, so that the heat sink 60 moves in a pendular motion with the lower end as the fulcrum point. The optical axis of the optical lens unit 50 is thereby changed upward or downward.

When a vehicle having the vehicle lighting fixture with the aiming mechanism travels a region where vehicular lanes are arranged on an opposite side, the optical axis of the optical lens unit 50 is directed downward by operating the aiming mechanism. Accordingly, the tourist solution light distribution shown in Fig. 2B can be achieved.

The present invention is not limited to the aforementioned embodiments, and various modifications may be made therein based on the above description. For example, the similar effects can be obtained by reversing left to right the aforementioned embodiments with respect to the vehicle lighting fixture of a vehicle for right-had traffic.

## Claims

1. A vehicle lighting fixture (10) comprising:
an optical system (40) which has a plurality of optical units (42, 44, 46, 48) and forms a low beam pattern, some (44, 46, 48) of the plurality of optical units (42, 44, 46, 48) forming a horizontal pattern of the low beam pattern, and the other (42) of the plurality of optical units (42, 44, 46, 48) forming a cut-off line of the low beam pattern; and
an adjusting mechanism (72, 83, 86) which can selectively change an illumination pattern of the optical unit which forms the cut-off line.

2. A vehicle lighting fixture (10), wherein the other (42) of the plurality of optical units (42, 44, 46, 48) forming the cut-off line is arranged on a side nearest to a center of a front face of a vehicle among the plurality of optical units (42, 44, 46, 48).

3. The vehicle lighting fixture (10) according to claim 1 or 2, wherein the adjusting mechanism comprises a control mechanism (72) which can control a light intensity of the other (42) of the plurality of optical units (42, 44, 46, 48) forming the cut-off line.

4. The vehicle lighting fixture (10) according to claim 1 or 2, wherein the adjusting mechanism comprises an aiming mechanism (83, 86) which can adjust an optical axis of the other (42) of the plurality of optical units (42, 44, 46, 48) forming the cut-off line in a vertical direction.
